# EUROPÄISCHE PATENTANMELDUNG

(11) **EP 2 325 464 A2**
(43) Veröffentlichungstag der Anmeldung: **25.05.2011**
(21) Anmeldenummer: 10190846.5
(22) Anmeldetag: 11.11.2010
(51) Int. Cl.: F02D 41/18, G01F 1/684

(54) **Messvorrichtung, Frischluftkanal, Frischluftanlage und Strömungsführungselement**

(30) Priorität: 20.11.2009 DE 102009054082
(71) Anmelder: MAHLE International GmbH, 70376 Stuttgart (DE)
(72) Erfinder: Conze, Michael, 72072, Tübingen (DE); Enderich, Andreas, 73734, Esslingen (DE); Schmidt, Peter, 74379, Ingersheim (DE); Strycharz, Wolfgang, 70372, Stuttgart (DE)
(74) Vertreter: BRP Renaud & Partner

(57) **Zusammenfassung**

Die vorliegende Erfindung betrifft eine Messvorrichtung (4) zum Messen einer Luftmasse einer Luftströmung (3) in einem Frischluftkanal (2) einer Brennkraftmaschine, insbesondere eines Kraftfahrzeugs, mit einem Luftmassensensor (5), der eine Messquerschnittsfläche (7) aufweist, die zur Luftmassenmessung mit einem Teil der im Frischluftkanal (2) geführten Luftströmung (3) beaufschlagt ist.

Bessere Messergebnisse über die Lebensdauer lassen sich erreichen, wenn der Luftmassensensor (5) ein Strömungsführungselement (11) aufweist, das eine durchströmbare Eintrittsquerschnittsfläche (12) und eine durchströmbare Austrittsquerschnittsfläche (13) aufweist und das einen von der Eintrittsquerschnittsfläche (12) zur Austrittsquerschnittsfläche (13) führenden Luftführungskanal (14) aufweist, wenn der Luftführungskanal (14) über die Austrittsquerschnittsfläche (13) in die Messquerschnittsfläche (7) übergeht, wenn die Austrittsquerschnittsfläche (13) hinsichtlich ihrer Geometrie der Messquerschnittsfläche (7) entspricht und wenn sich die Eintrittsquerschnittsfläche (12) hinsichtlich ihrer Geometrie von der Austrittsquerschnittsfläche (13) unterscheidet.

## Beschreibung

Die vorliegende Erfindung betrifft eine Messvorrichtung zum Messen einer Luftmasse einer Luftströmung in einem Frischluftkanal einer Brennkraftmaschine, insbesondere eines Kraftfahrzeugs, mit den Merkmalen des Oberbegriffs des Anspruchs 1. Die Erfindung betrifft außerdem eine mit einer solchen Messvorrichtung ausgestattete Frischluftanlage und einen mit einer derartigen Messvorrichtung ausgestatteten Frischluftkanal sowie ein Strömungsführungselement für eine derartige Messvorrichtung.

Aus der DE 101 45 195 A1 ist eine Messvorrichtung zum Messen einer Luftmasse einer Luftströmung in einem Frischluftkanal einer Brennkraftmaschine bekannt, die einen Luftmassensensor aufweist. Der Luftmassensensor weist eine Messquerschnittsfläche auf, die zur Luftmassenmessung mit einem Teil der im Frischluftkanal geführten Luftströmung beaufschlagt ist. Um die Luftströmung zur Brennkraftmaschine durch die Luftmassenmessung nicht oder nur unwesentlich zu behindern, ist die Messquerschnittsfläche klein gegenüber einer durchströmbaren Querschnittsfläche des Frischluftkanals im Bereich des Luftmassensensors. Bei der bekannten Messvorrichtung ist im Bereich des Luftmassensensors eine Gleichrichterstruktur in den Frischluftkanal eingebaut, um eine Homogenisierung der Luftströmung zu erzielen.

Messvorrichtungen dieser Art werden bei Brennkraftmaschinen zur Erfassung der zugeführten Luftmasse benötigt, um die Motorsteuerung optimal betreiben zu können. Da die Messquerschnittsfläche der dabei verwendeten Luftmassensensoren deutlich kleiner ist als die von der Luftströmung durchströmte Kanalquerschnittsfläche, erfolgt ein Abgleich über Kennfelder, welche insbesondere auch ein Geschwindigkeitsprofil innerhalb der Kanalquerschnittsfläche berücksichtigten. Es hat sich jedoch gezeigt, dass Frischluftfilter, die im Frischluftkanal stromauf der Messvorrichtung angeordnet sein können, abhängig von ihrem Beladungszustand eine mehr oder weniger starke Veränderung des Geschwindigkeitsprofils im Kanalquerschnitt erzeugen. Eine derartige Veränderung der Geschwindigkeitsverteilung innerhalb der Kanalquerschnittsfläche wird jedoch vom Luftmassensensor nicht erfasst, wodurch die von der Messvorrichtung ermittelte Luftmasse mit zunehmender Beladung des Luftfilters immer mehr von der tatsächlich durch den Frischluftkanal strömenden Luftmasse abweicht.

Die vorliegende Erfindung beschäftigt sich mit dem Problem, für eine Messvorrichtung der eingangs genannten Art bzw. für einen damit ausgestatteten Frischluftkanal eine Möglichkeit aufzuzeigen, den Einfluss eines sich verändernden Geschwindigkeitsprofils innerhalb des Frischluftkanals auf die Massenmessung zu reduzieren.

Dieses Problem wird erfindungsgemäß durch die Gegenstände der abhängigen Ansprüche gelöst. Vorteilhafte Ausführungsformen sind Gegenstand der abhängigen Ansprüche.

Die Erfindung beruht auf dem allgemeinen Gedanken, den Luftmassensensor mit einem Strömungsführungselement auszustatten, das eine durchströmbare Eintrittsquerschnittsfläche und eine durchströmbare Austrittsquerschnittsfläche aufweist, die über einen seitlich geschlossenen Luftführungskanal miteinander verbunden sind. Die Austrittsquerschnittsfläche entspricht der Messquerschnittsfläche, während die Eintrittsquerschnittsfläche eine von der Austrittsquerschnittsfläche abweichende Geometrie besitzt. Der Luftführungskanal schafft einen verlustarmen Übergang von der Eintrittsquerschnittsfläche zur Austrittsquerschnittsfläche. Durch den erfindungsgemäßen Vorschlag kann eine Eintrittsquerschnittsfläche bereitgestellt werden, die einen repräsentativen Ausschnitt aus der Kanalquerschnittsfläche herausgreifen kann, wodurch ein sich änderndes Geschwindigkeitsprofil innerhalb des Kanalquerschnitts besser erfasst werden kann. Mit anderen Worten, anstelle einer punktuellen Messung, die mit Hilfe der Messquerschnittsfläche des Luftmassensensors erfolgt, lässt sich zumindest eine eindimensionale Integrationsmessung durchführen, ohne dass hierzu die Messquerschnittsfläche des Luftmassensensors verändert werden muss. Durch die eindimensionale Integration der Geschwindigkeitsverteilung innerhalb eines repräsentativen Bereichs des Kanalquerschnitts lassen sich Profiländerungen in der Geschwindigkeitsverteilung mit erhöhter Zuverlässigkeit erfassen und bei der Massenbestimmung berücksichtigen.

Entsprechend einer vorteilhaften Ausführungsform kann die Eintrittsquerschnittsfläche maximal 15% oder maximal 10% von der Austrittsquerschnittsfläche abweichen. Bevorzugt wird eine Ausführungsform, bei welcher die Eintrittsquerschnittsfläche gleich groß ist wie die Austrittsquerschnittsfläche. Die Formulierungen "maximal" und "gleich groß" sind dabei so zu verstehen, dass Abweichungen im Rahmen der üblichen Herstellungstoleranzen vorliegen können. Entsprechendes gilt auch für andere Maßangaben oder Relationen in vorliegendem Zusammenhang. Durch die gleichbleibenden Flächen oder nur minimal variierenden Flächen am Eintritt und am Austritt wird der Einfluss auf die Massenmessung reduziert. Insbesondere kann dadurch auch ein Druckanstieg bzw. ein Anstieg des Durchströmungswiderstands im Frischluftkanal durch die Anbringung des Strömungsführungselements vermieden oder zumindest reduziert werden.

Zweckmäßig kann die Eintrittsquerschnittsfläche schlitzförmig ausgestaltet sein, wodurch die zuvor genannte eindimensionale Messung besonders einfach ermöglicht wird.

Das Strömungsführungselement kann bezüglich des Luftmassensensors ein separat hergestelltes Bauteil sein, das auf geeignete Weise an den Luftmassensensor angebaut werden kann. Beispielsweise kann das Strömungsführungselement so ausgestaltet sein, dass es an den Luftmassensensor angeclipst werden kann. Das Strömungsführungselement kann dadurch zum Nachrüsten eines herkömmlichen Luftmassensensors verwendet werden. Insbesondere muss hierzu ein herkömmlicher Luftmassensensor nicht oder nur geringfügig modifiziert werden.

Entsprechend einer alternativen Ausführungsform kann der Luftmassensensor ein Sensorgehäuse aufweisen, das die Messquerschnittsfläche einfasst und an dem das Strömungsführungselement integral ausgeformt ist. Diese Integralbauweise zeichnet sich durch einen reduzierten Strömungswiderstand aus.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte, geschnittene Seitenansicht einer Frischluft- anlage im Bereich einer Messvorrichtung,
- Fig. 2: einen Querschnitt eines Frischluftkanals der Frischluftanlage im Be- reich einer Eintrittsquerschnittsfläche entsprechend Schnittlinien II in Fig. 1,
- Fig. 3: eine perspektivische Ansicht eines Strömungsführungselements,
- Fig. 4: eine Seitenansicht (a) und eine Axialansicht (b) eines anderen Strömungsführungselements,
- Fig. 5: eine Seitenansicht (a) und eine Axialansicht (b) eines weiteren Strömungsführungselements,
- Fig. 6: eine perspektivische Ansicht einer alternativen Ausgestaltung des Strömungsführungselements.

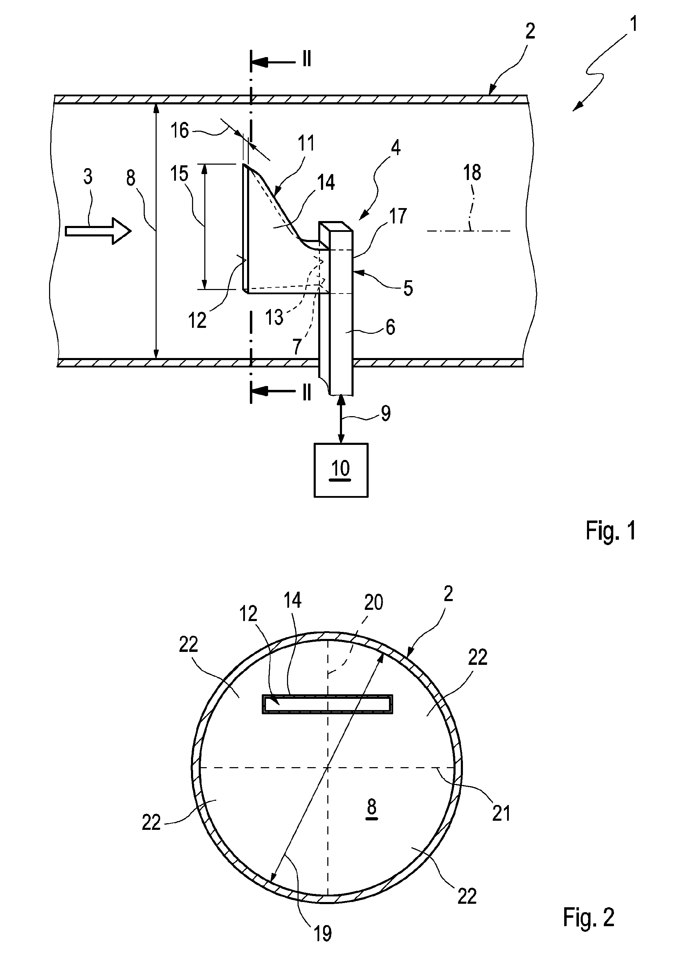

Entsprechend Fig. 1 umfasst eine hier nur teilweise dargestellte Frischluftanlage 1 zur Versorgung einer nicht gezeigten Brennkraftmaschine mit Frischluft einen Frischluftkanal 2, in dem eine Luftströmung 3 geführt ist. Die Brennkraftmaschine kann zusammen mit der Frischluftanlage 1 in einem Kraftfahrzeug angeordnet sein. Der Frischluftkanal 2 ist mit einer Messvorrichtung 4 ausgestattet, mit deren Hilfe eine Luftmasse der im Frischluftkanal 2 geführten Luftströmung 3 gemessen werden kann. Die Messvorrichtung 4 weist einen Luftmassensensor 5 auf, der im Beispiel über eine Halterung 6 im Frischluftkanal 2 positioniert ist. Der Luftmassensensor 5 besitzt eine Messquerschnittsfläche 7. Diese ist deutlich kleiner als eine durchströmbare Kanalquerschnittsfläche 8 im Bereich der Messvorrichtung 4. Beispielsweise beträgt die Messquerschnittsfläche 7 maximal 10% oder maximal 5% der Kanalquerschnittsfläche 8 im Bereich des Luftmassensensors 5. Der Luftmassensensor 5 ist im Frischluftkanal 2 so positioniert, dass seine Messquerschnittsfläche 7 zur Luftmassenmessung mit einem Teil der Luftströmung 3 beaufschlagt ist.

Im Frischluftkanal 2 kann stromauf der Messvorrichtung 4 ein hier nicht gezeigtes Luftfilter angeordnet sein.

Mit Hilfe des Luftmassensensors 5 generierte elektrische Signale werden entsprechend einem Doppelpfeil 9 einer Auswerteelektronik 10 zugeführt, die ebenfalls einen Bestandteil der Messvorrichtung 4 bildet und die beispielsweise mittels eines Kennfelds die vom Luftmassensensor 5 ermittelten Messwerte in Luftmassen umrechnet. Der Luftmassensensor 5 kann beispielsweise als Heißfilmmesser ausgestaltet sein.

Bei der hier vorgestellten Ausgestaltung weist der Luftmassensensor 5 ein Strömungsführungselement 11 auf. Dieses umfasst eine durchströmbare Eintrittsquerschnittsfläche 12, eine durchströmbare Austrittsquerschnittsfläche 13 sowie einen Luftführungskanal 14. Der Luftführungskanal 14 führt von der Eintrittsquerschnittsfläche 12 zur Austrittsquerschnittsfläche 13 und ist vorzugsweise seitlich geschlossen. Der Luftführungskanal 14 ist im Bereich der Messquerschnittsfläche 7 am Luftmassensensor 5 angeordnet, derart, dass der Luftführungskanal 14 über die Austrittsquerschnittsfläche 13 in die Messquerschnittsfläche 7 übergeht. Dabei entspricht die Austrittsquerschnittsfläche 13 hinsichtlich ihrer Geometrie und somit automatisch auch hinsichtlich ihrer Größe der Messquerschnittsfläche 7, d. h. sie sind im Wesentlichen gleich. Bemerkenswert ist nun, dass die Eintrittsquerschnittsfläche 12 hinsichtlich ihrer Geometrie unterschiedlich zur Austrittsquerschnittsfläche 13 gestaltet ist.

Dabei kann es entsprechend einer bevorzugten Ausführungsform vorgesehen sein, die Eintrittsquerschnittsfläche 12 und die Austrittsquerschnittsfläche 13 etwa gleich groß, also mit etwa gleich großen Flächeninhalten auszustatten. Beispielsweise weicht die Eintrittsquerschnittsfläche 12 hinsichtlich ihrer Fläche nur maximal 15% oder nur maximal 10% von der Austrittsquerschnittsfläche 13 ab. Alternativ ist es ebenso möglich, die Eintrittsquerschnittsfläche 12 gleich groß auszugestalten wie die Austrittsquerschnittsfläche 13.

In den Beispielen der Fig. 1 - 5 ist die Eintrittsquerschnittsfläche 12 deutlich länger als breit gestaltet. Beispielsweise ist eine in Fig. 1 mit 15 bezeichnete Länge mindestens fünfmal oder mindestens zehnmal größer als eine in Fig. 1 mit 16 bezeichnete Breite. Insbesondere kann dabei eine schlitzförmige Ausgestaltung der Eintrittsquerschnittsfläche 12 realisiert werden.

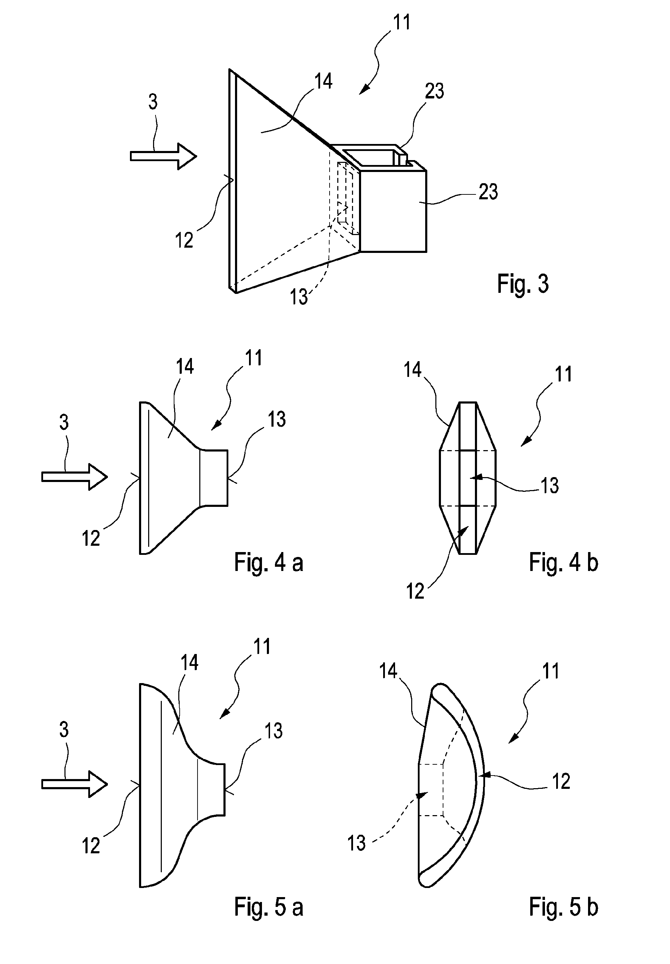

Die Fig. 1 - 4 zeigen eine rechteckige Gestalt für die Eintrittsquerschnittsfläche 12. Dies ist jedoch ohne Beschränkung der Allgemeinheit. Dementsprechend zeigt Fig. 5 eine gekrümmte Kontur für die schlitzförmige Eintrittsquerschnittsfläche 12. Grundsätzlich sind jedoch auch andere Geometrien für die Eintrittsquerschnittsfläche 12 denkbar, wie zum Beispiel oval, nierenförmig oder sternförmig. Entsprechendes gilt auch für die Austrittsquerschnittsfläche 13, die im gezeigten, vereinfachten Beispiel jeweils rechteckig konfiguriert ist. Auch hier sind andere Geometrien denkbar, wie zum Beispiel rund, kreisförmig, quadratisch, oval oder dergleichen mehr.

Zur Reduzierung des Durchströmungswiderstands kann der Luftführungskanal 14 entsprechend einer vorteilhaften Ausgestaltung die Eintrittsquerschnittsfläche 12 stufenlos in die Austrittsquerschnittsfläche 13 überführen. Dabei können gleichzeitig übermäßige Neigungen der seitlichen Wandflächen des Luftführungskanals 14 gegenüber der Luftströmung 3 vermieden werden. Beispielsweise bleiben die Neigungen bei weniger als 45° oder weniger als 30° oder weniger als 15°.

Entsprechend Fig. 1 besitzt der Luftmassensensor 5 ein Sensorgehäuse 17. Das Sensorgehäuse 17 fasst die Messquerschnittsfläche 7 ein. An diesem Sensorgehäuse 17 kann entsprechend Fig. 1 der Luftführungskanal 14 bzw. das Strömungsführungselement 11 integral ausgeformt sein. Hierdurch besitzt die Messvorrichtung 4 selbst einen sehr geringen Luftwiderstand. Alternativ kann entsprechend Fig. 3 auch eine Ausführungsform realisiert werden, bei welcher das Strömungsführungselement 11 bezüglich des Luftmassensensors 5 ein separat hergestelltes Bauteil ist. Das Strömungsführungselement 11 kann dann an den Luftmassensensor 5 angebaut werden. Beispielsweise kann das Strömungsführungselement 11, insbesondere integral daran ausgeformte, Clipelemente 23 aufweisen, mit denen das Strömungsführungselement 11 an das Sensorgehäuse 17 angeclipst werden kann.

Die Eintrittsquerschnittsfläche 12 liegt in einer Eintrittsebene, die sich quer zur Längsmittelachse 18 des Frischluftkanals 2 erstreckt. Die Luftströmung 3 strömt parallel zur Längsmittelachse 18 also senkrecht zur Eintrittsebene. Zweckmäßig ist die Austrittsquerschnittsfläche 13 in einer Austrittsebene angeordnet, die sich senkrecht zur Längsmittelachse 18 erstreckt. Insoweit sind die Eintrittsquerschnittsfläche 12 und die Austrittsquerschnittsfläche 13 vorzugsweise parallel zueinander orientiert. Die Querschnittsflächen 12, 13 können auch in zueinander geneigten Ebenen liegen.

Die Strömungsumlenkung innerhalb des Luftführungskanals 14 erfolgt von der Eintrittsquerschnittsfläche 12 bis zur Austrittsquerschnittsfläche 13 um maximal 45° oder um maximal 30° oder um maximal 15°.

Fig. 4a und 4b zeigen eine Ausführungsform, bei welcher die Eintrittsquerschnittsfläche 12 in Richtung der Luftströmung 3 die Austrittsquerschnittsfläche 13 überlappt. Im Unterschied dazu zeigen die Fig. 5a und 5b ein Beispiel für eine Ausführungsform, bei welcher die Eintrittsquerschnittsfläche 12 bezüglich der Luftströmung 3 seitlich versetzt zur Austrittsquerschnittsfläche 13 angeordnet ist. In diesem Fall liegt somit in Richtung der Luftströmung 3 keine Überlappung oder Überdeckung zwischen Eintrittsquerschnittsfläche 12 und Austrittsquerschnittsfläche 13 vor. Bei einer alternativen Ausgestaltung der in den Fig. 4a, 4b gezeigten Ausführungsform können die Ein- und Austrittsquerschnittsflächen 12, 13 auch versetzt zueinander angeordnet sein. Bei einer anderen Ausgestaltung der in den Fig. 5a, 5b gezeigten Ausführungsformen können sich die Ein- und Austrittsquerschnittsflächen 12, 13 auch teilweise überlappen.

Entsprechend Fig. 2 kann die Abmessung bzw. Geometrie der Eintrittsquerschnittsfläche 12 in Relation zur Geometrie des Frischluftkanals 2 gezielt so gewählt werden, dass sich die Eintrittsquerschnittsfläche 12 in einer quer zur Strömungsrichtung 3 erstreckenden Richtung über wenigstens 50% eines Durchmessers 19 des Frischluftkanals 2 erstreckt. Beim Durchmesser 19 handelt es sich um den durchströmbaren Innendurchmesser 19 des Frischluftkanals 2. Im Beispiel beträgt diese Quererstreckung der Eintrittsquerschnittsfläche 12 etwa 60-70% des Durchmessers 19. In Fig. 2 sind zwei senkrecht zueinander verlaufende, den durchströmbaren Querschnitt des Frischluftkanals 2 jeweils halbierende Geraden 20 und 21 mit unterbrochener Linie eingezeichnet. Hierdurch werden innerhalb der Kanalquerschnittsfläche 8 insgesamt vier gleiche Flächen 22 definiert. Mit anderen Worten, die durchströmbare Kanalquerschnittsfläche 8 ist durch die beiden Geraden 20, 21 in vier gleiche Flächen 22 unterteilt. Diese Flächen 22 bilden dabei vier Quadranten, die im Folgenden ebenfalls mit 22 bezeichnet werden. Die Eintrittsquerschnittsfläche 12 ist zweckmäßig nun so dimensioniert und positioniert, dass sie sich innerhalb von wenigstens zwei dieser gedachten Quadranten 22 erstreckt. Durch die in den Ausführungsbeispielen gezeigten verschiedenen Bauweisen wird erreicht, dass über die Eintrittsquerschnittsfläche 12 ein sich im Betrieb änderndes Geschwindigkeitsprofil im Frischluftkanal 2 erfasst werden kann. Der in Figur 2 dargestelle Querschnitt des Frischluftkanals 2 verfügt über einen kreisförmigen Querschnitt. Bei anderen Ausgestaltungen kann dieser Querschnitt auch über eine andere Geometrie, insbesondere oval, polygon oder eckig ausgeführt sein. Diese Querschnittsfläche kann dann ebenfalls in vier Quadranten unterteilt werden.

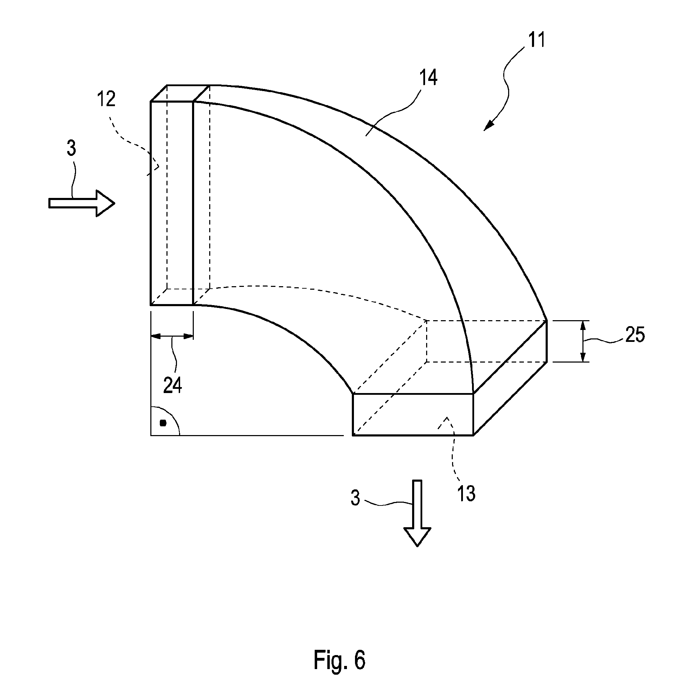

In Fig. 6 ist eine weitere alternative Ausgestaltung des Strömungsführungselements 11 in perspektivischer Ansicht dargestellt. Dieses Strömungsführungselement 11 weist rechteckförmige Ein- und Austrittsquerschnittsflächen 12, 13 auf, wobei diese Ein- und Austrittsquerschnittsflächen 12, 13 auch jede beliebige im vorangehenden Beschreibungsteil beschriebene Geometrie aufweisen kann. Im Unterschied zu den vorangehend beschriebenen Fig., ist die Einströmungsquerschnittsfläche 12 nicht parallel zu der Ausströmungsquerschnittsfläche 13 angeordnet. Die Ausströmungsquerschnittsfläche 13 ist bei diesem Ausführungsbeispiel um 90° gedreht zu der Einströmungsquerschnittsfläche 12 angeordnet. Bei anderen Ausgestaltungen können die Ein- und Ausströmungsquerschnittsflächen 12, 13 auch einen anderen, beliebigen Winkel, insbesondere kleiner 90° einschließen. Diese Winkel können z.B. 30°, 45° oder 60° betragen. Durch eine derartige Strömungsumlenkung kann der Luftmassensensor 5 derart in dem Frischluftkanal 2 angeordnet werden, dass die Luftströmung möglichst wenig beeinträchtigt wird und/oder der Luftmassensensor 5 durch eine geneigte Einbausituation einfach montierbar ist. Die Einströmquerschnittsfläche 12 ist parallel zur Querschnittsfläche des Frischluftkanals 2 angeordnet, wodurch eine rechtwinklige Anströmung des Strömungselementes 11 erreicht wird. Die Austrittsströmungsquerschnittsfläche 13 ist parallel zur Messquerschnittsfläche 7 des Luftmassensensors 5 angeordnet. Zur Erreichung von exakten Messergebnissen verfügt das Strömungselement 11 über eine Eintrittsberuhigungszone 24 und eine Austrittsberuhigungszone 25. Diese Beruhigungszonen 24, 25 können, wie dargestellt, gemeinsam an dem Strömungselement 11 verwirklicht sein. Bei anderen Ausgestaltungen kann auch nur eine einzige Beruhigungszone 24 oder 25 verwirklicht sein. Im Bereich der Beruhigungszone 24, 25 verfügt das Strömungselement 11 in der Strömungsrichtung über einen konstanten Querschnitt, der parallel zu der Eintrittsquerschnittsfläche 12 bzw. Austrittsquerschnittsfläche 13 verläuft. Die Anordnung einer einzigen oder beider Beruhigungszone/n 24, 25 kann selbstverständlich auch bei den Ausführungsbeispielen gemäß der vorangehenden Fig. oder bei anderen, nicht näher erläuterten Ausführungsformen verwirklicht sein.

## Patentansprüche

1. Messvorrichtung zum Messen einer Luftmasse einer Luftströmung (3) in einem Frischluftkanal (2) einer Brennkraftmaschine, insbesondere eines Kraftfahrzeugs, mit einem Luftmassensensor (5), der eine Messquerschnittsfläche (7) aufweist, die zur Luftmassenmessung mit einem Teil der im Frischluftkanal (2) geführten Luftströmung (3) beaufschlagt ist,
**dadurch gekennzeichnet,**
- **dass** der Luftmassensensor (5) ein Strömungsführungselement (11) aufweist, das eine durchströmbare Eintrittsquerschnittsfläche (12) und eine durchströmbare Austrittsquerschnittsfläche (13) aufweist und das einen von der Eintrittsquerschnittsfläche (12) zur Austrittsquerschnittsfläche (13) führenden Luftführungskanal (14) aufweist,
- **dass** der Luftführungskanal (14) über die Austrittsquerschnittsfläche (13) in die Messquerschnittsfläche (7) übergeht,
- **dass** die Austrittsquerschnittsfläche (13) hinsichtlich ihrer Geometrie der Messquerschnittsfläche (7) entspricht,
- **dass** sich die Eintrittsquerschnittsfläche (12) hinsichtlich ihrer Geometrie von der Austrittsquerschnittsfläche (13) unterscheidet,
- **dass** die Eintrittsquerschnittsfläche (12) schlitzförmig ausgestaltet und exzentrisch zur Längsmittelachse (18) des Frischluftkanals (2) angeordnet ist.

2. Messvorrichtung nach Anspruch 1,
**dadurch gekennzeichnet,**
**dass** die Eintrittsquerschnittsfläche (12) hinsichtlich ihrer Fläche maximal 15% oder maximal 10% von der Austrittsquerschnittsfläche (13) abweicht.

3. Messvorrichtung nach Anspruch 1 oder 2,
**dadurch gekennzeichnet,**
**dass** die Eintrittsquerschnittsfläche (12) gleich groß ist wie die Austrittsquerschnittsfläche (13).

4. Messvorrichtung nach einem der Ansprüche 1 bis 3,
**dadurch gekennzeichnet,**
**dass** die Eintrittsquerschnittsfläche (12) und die Austrittsquerschnittsfläche (13) als Rechteckprofile ausgestaltet sind, die sich durch unterschiedliche Kantenlängen voneinander unterscheiden.

5. Messvorrichtung nach einem der Ansprüche 1 bis 4,
**dadurch gekennzeichnet,**
**dass** die Eintrittsquerschnittsfläche (12) mindestens fünfmal oder mindestens zehnmal länger ist als breit.

6. Messvorrichtung nach einem der Ansprüche 1 bis 5,
**dadurch gekennzeichnet,**
**dass** der Luftführungskanal (14) die Eintrittsquerschnittsfläche (12) stufenlos in die Austrittsquerschnittsfläche (13) überführt.

7. Messvorrichtung nach einem der Ansprüche 1 bis 6,
**dadurch gekennzeichnet,**
- **dass** das Strömungsführungselement (11) bezüglich des Luftmassensensors (5) ein separat hergestelltes Bauteil ist und an den Luftmassensensor (5) angebaut ist, oder
- **dass** der Luftmassensensor (5) ein Sensorgehäuse (17) aufweist, das die Messquerschnittsfläche (7) einfasst und an dem das Strömungsführungselement (11) integral ausgeformt ist.

8. Messvorrichtung nach einem der Ansprüche 1 bis 7,
**dadurch gekennzeichnet,**
- **dass** die Eintrittsquerschnittsfläche (12) parallel zur Austrittsquerschnittsfläche (13) orientiert ist, oder
- **dass** die Eintrittsquerschnittsfläche (12) zur Austrittsquerschnittsfläche (13) geneigt ist.

9. Messvorrichtung nach einem der Ansprüche 1 bis 8,
**dadurch gekennzeichnet,**
- **dass** die Eintrittsquerschnittsfläche (12) die Austrittsquerschnittsfläche (13) in Richtung einer zu messenden Luftströmung (3) überlappt, oder
- **dass** die Eintrittsquerschnittsfläche (12) bezüglich der Richtung einer zu messenden Luftströmung (3) seitlich versetzt zur Austrittsquerschnittsfläche (13) angeordnet ist.

10. Messvorrichtung nach einem der Ansprüche 1 bis 9,
**dadurch gekennzeichnet,**
- **dass** das Strömungsführungselement (11) eine einlassseitige Beruhigungszone (24) aufweist, die entlang ihrer Erstreckung in Strömungsrichtung konstant die Eintrittsquerschnittsfläche (12) aufweist, und/oder
- **dass** das Strömungsführungselement (11) eine auslassseitige Beruhigungszone (25) aufweist, die entlang ihrer Erstreckung in Strömungsrichtung konstant die Austrittsquerschnittsfläche (13) aufweist.

11. Frischluftkanal einer Frischluftanlage (1) einer Brennkraftmaschine, insbesondere eines Kraftfahrzeugs, mit einer Messvorrichtung (4) nach einem der Ansprüche 1 bis 10.

12. Frischluftkanal nach Anspruch 11,
**dadurch gekennzeichnet,**
- **dass** die Eintrittsquerschnittsfläche (12) so ausgestaltet ist, dass sie sich in einer quer zur Strömungsrichtung im Frischluftkanal (2) erstreckenden Richtung über mindestens 50% des Durchmessers (19) des Frischluftkanals (2) erstreckt, und/oder
- **dass** die Eintrittsquerschnittsfläche (12) so ausgestaltet ist, dass sie sich innerhalb von mindestens zwei gedachten Quadranten erstreckt, die eine am Ort des Luftmassensensors (5) vorliegende durchströmbare Kanalquerschnittsfläche (8) des Frischluftkanals (2) in vier gleiche Flächen (22) unterteilen, und/oder
- **dass** stromauf des Luftmassensensors (5) ein Luftfilter im Frischluftkanal (2) angeordnet ist.

13. Frischluftanlage für eine Brennkraftmaschine, insbesondere eines Kraftfahrzeugs, mit einem Frischluftkanal (2) nach einem der Ansprüche 11 oder 12 und/oder mit einer Messvorrichtung (4) nach einem der Ansprüche 1 bis 10.

14. Strömungsführungselement zum Anbau an einen Luftmassensensor (5) einer Messvorrichtung (4) nach einem der Ansprüche 1 bis 10.
